# EUROPÄISCHE PATENTSCHRIFT

(11) **EP 3 911 524 B1**
(45) Veröffentlichungstag und Bekanntmachung des Hinweises auf die Patenterteilung: **15.11.2023**
(21) Anmeldenummer: 20707198.6
(22) Anmeldetag: 18.02.2020
(51) Int. Cl.: F16C 13/02, B60B 35/08, B60B 35/02, B60B 37/06, F16C 3/02

(54) **RADSATZ FÜR FAHRZEUGE**
WHEELSET FOR VEHICLES
ESSIEU MONTÉ POUR VÉHICULES

(30) Priorität: 20.02.2019 AT 501342019
(43) Veröffentlichungstag der Anmeldung: 24.11.2021
(73) Patentinhaber: Siemens Mobility Austria GmbH, 1210 Wien (AT)
(72) Erfinder: MOSER, Christian, 8042 Graz (AT); RIEGER, Martin, 8010 Graz (AT); RITTER, Helmut, 8010 Graz (AT); STINE, Gerhard, 8055 Graz (AT)
(74) Vertreter: Siemens Patent Attorneys
(86) Internationale Anmeldenummer: PCT/EP2020/054178
(87) Internationale Veröffentlichungsnummer: WO 2020/169567

(56) Entgegenhaltungen:
- WO-A1-2019/002343
- DE-A1- 1 605 077
- DE-A1-102009 033 353
- DE-A1-102014 000 641

## Beschreibung

Die Erfindung betrifft einen Radsatz für Fahrzeuge, insbesondere für Schienenfahrzeuge, der ein erstes Rad, ein zweites Rad sowie eine Radsatzwelle aufweist, wobei die Radsatzwelle zumindest ein erstes Wellenteil, ein zweites Wellenteil und ein drittes Wellenteil umfasst, die miteinander verbunden sind, wobei von dem zumindest ersten Wellenteil, dem zweiten Wellenteil und dem dritten Wellenteil zumindest ein Wellenteil als mit Fluid befüllbare Hohlwelle ausgebildet ist oder zumindest einen mit Fluid befüllbaren Hohlraum aufweist.

Radsatzwellen müssen Kräfte zwischen Rädern übertragen und eine Anordnung von Radsatzkomponenten, z.B. Antriebs- und Bremskomponenten, Radsatzlager etc. auf dem Radsatz ermöglichen.

Weiterhin sind eine hohe Bauteil- und Betriebssicherheit, eine geringe Masse, eine hohe Lebensdauer sowie geringe Kosten Auslegungsziele.

Da es sich bei Radsätzen um sicherheitsrelevante Bauteile handelt, ist eine Zustandsbeurteilung wichtig, um Schäden und Fehler (z.B. Risse, fehlende Verbindungsmittel) rechtzeitig erkennen und entsprechende Wartungs- und Instandhaltungs- bzw. Instandsetzungsmaßnahmen durchführen zu können. Eine effektive Detektion von Schäden und Fehlern ist insbesondere bei Schnittstellen (z.B. Verbindungsbereiche, Trennfugen etc.), wie sie beispielsweise mehrteilige Radsätze aufweisen, bedeutsam.

Aus dem Stand der Technik ist beispielsweise die DE 1 605 077 A1 bekannt, welche auf Hohlwellen angeordnete Monoblockräder zeigt, die mit den Hohlwellen verschraubt sind.

Weiterhin offenbart die DE 10 2014 000 641 A1 eine mehrere Einzelteile umfassende Radsatzwelle für ein Schienenfahrzeug. Zwischen einzelnen Radsatzwellenteilen sind Räder und Bremsscheiben vorgesehen, welche mit jeweils beidseitig angrenzenden Radsatzwellenteilen verschraubt sind.

Ferner ist in der DE 10 2009 033 353 A1 ein Radsatz für Hochgeschwindigkeitszüge gezeigt, welcher eine als Hohlwelle ausgeführte Radsatzwelle mit einer Stützschraube zur Hemmung einer Rissausbreitung aufweist. Zur Risskontrolle der Radsatzwelle kann ein Radsatzwelleninnenraum über ein Ventil mit Druckluft gefüllt werden. Ein Riss kann anhand eines Luftaustritts detektiert werden.

Die genannten Ansätze weisen in ihren bekannten Formen den Nachteil auf, dass keine Einrichtungen zur betrieblichen Detektion von Schäden oder Fehlern in Kombination mit flexibel tauschbaren Segmenten eines mehrteiligen Radsatzes vorgesehen sind.

Der Erfindung liegt die Aufgabe zugrunde, einen gegenüber dem Stand der Technik weiterentwickelten, für eine Einrichtung zur laufenden Integritätsüberwachung und -Diagnose geeigneten Radsatz anzugeben, welcher modular ausgeführt ist. Erfindungsgemäß wird diese Aufgabe gelöst mit einem Radsatz der eingangs genannten Art, bei dem zumindest das erste Wellenteil mit dem zweiten Wellenteil lösbar verbunden ist, wobei zumindest zwischen dem ersten Wellenteil und dem ersten Rad oder zwischen dem ersten Wellenteil und dem zweiten Wellenteil zumindest eine dichtende erste Trennfuge gewinkelt ausgebildet ist.

Dadurch wird eine baukastenartige und somit flexible sowie belastungsgerechte Ausführung der Radsatzwelle erzielt. Beispielsweise kann das zweites Wellenteil aus einem anderen Werkstoff als das erste Wellenteil und das dritte Wellenteil gefertigt sein, eine unterschiedliche Geometrie oder unterschiedliche Dimensionen aufweisen. Weiterhin werden Wartungs- und Instandhaltungsvereinfachungen erzielt, da das erste Wellenteil und das zweite Wellenteil, bzw. bei entsprechend gleicher Verbindungstechnik auch das zweite Wellenteil und das dritte Wellenteil, rasch voneinander gelöst bzw. miteinander verbunden werden können (z.B. im Zusammenhang mit einer Schadensdetektion). Es ist dabei auch denkbar, dass Wellenteile ersetzt werden. Beispielsweise kann das zweite Wellenteil durch ein neues zweites Wellenteil aus einem anderen Werkstoff ersetzt werden.

Durch die gewinkelte erste Trennfuge wird eine Dichtwirkung gegen ein Ausdringen von Fluid aus der Hohlwelle bzw. aus dem Hohlraum der Radsatzwelle bewirkt. Auf gesonderte Maßnahmen bzw. Vorrichtungen zur Abdichtung der Hohlwelle bzw. des Hohlraums nach außen kann verzichtet werden.

Eine besonders starke Dichtwirkung wird erzielt, wenn das zumindest erste Wellenteil und das erste Rad oder das zumindest erste Wellenteil und das zweite Wellenteil im Bereich der zumindest ersten Trennfuge gemeinsame Tangentialflächen aufweisen.

Es ist vorteilhaft, wenn zumindest eine erste Bohrung für ein erstes Verbindungsmittel zwischen dem zumindest ersten Wellenteil und dem zweiten Wellenteil oder zwischen dem zumindest ersten Wellenteil und dem ersten Rad mit einem Innenraum der Hohlwelle oder mit dem zumindest einen Hohlraum verbunden ist.

Durch diese Maßnahme wird, bei einer Füllung des Innenraums der Hohlwelle oder des Hohlraums mit Fluid und aufgrund entsprechender Sensorik, eine rechtzeitige Erkennung von gelösten oder fehlenden Verbindungsmitteln (z.B. Schrauben) ermöglicht. Dadurch werden eine hohe Betriebssicherheit und Verfügbarkeit erzielt sowie eine zustandsorientierte Wartung und Instandhaltung unterstützt. Eine derartige Bauteil-Integritätsüberwachung und -Diagnose ist insbesondere bei sicherheitskritischen Schraubenverbindungen vorteilhaft.

Es ist weiterhin günstig, wenn das erste Rad und das zweite Rad über Schraubenverbindungen mit der Radsatzwelle gekoppelt sind.

Dadurch können das erste Rad und das zweite Rad leicht von der Radsatzwelle gelöst werden, wodurch bei einem Rädertausch Vereinfachungen bewirkt werden.

Weiterhin kann es auch von Vorteil sein, wenn das erste Verbindungsmittel das erste Rad mit dem zumindest ersten Wellenteil und dem zweiten Wellenteil verbindet.

Durch diese Maßnahme wird die Anzahl erforderlicher Verbindungsmittel reduziert und es wird eine besonders kompakte Anordnung erzielt.

Zur Erzielung einer kompakten Anordnung ist es wiederum hilfreich, wenn das erste Verbindungsmittel in einer ersten Sacklochbohrung vorgesehen ist.

Eine besonders sichere Verbindung des ersten Rads mit der Radsatzwelle wird erzielt, wenn das erste Rad auf das zumindest erste Wellenteil aufgeschoben ist und einen ersten Flansch des zumindest ersten Wellenteils kontaktiert, wobei das zweite Wellenteil auf das zumindest erste Wellenteil aufgeschoben ist und das erste Rad zwischen dem ersten Flansch sowie dem zweiten Wellenteil eingespannt ist.

Erfindungsgemäß ist es darüber hinaus möglich, dass auf der Radsatzwelle zumindest eine Wellenbremsscheibe vorgesehen ist, wobei die Radsatzwelle im Bereich der zumindest einen Wellenbremsscheibe als Nabe der zumindest einen Wellenbremsscheibe ausgebildet ist.

Durch diese Maßnahme kann auf einen Presssitz zwischen der Radsatzwelle und der Bremsscheibe verzichtet werden, wodurch Montage- und Demontagevorgänge der Wellenbremsscheibe vereinfacht werden.

Eine günstige Lösung wird erzielt, wenn eine zweite Bohrung für ein zweites Verbindungsmittel zwischen der Radsatzwelle und der zumindest einen Wellenbremsscheibe mit dem Innenraum der Hohlwelle oder mit dem zumindest einen Hohlraum verbunden ist.

Durch diese Maßnahme kann die Bauteil-Integritätsüberwachung und -Diagnose auch dahingehend erfolgen, ob Verbindungsmittel zwischen der Wellenbremsscheibe und der Radsatzwelle sich gelöst haben oder fehlen.

Eine vorteilhafte Ausgestaltung erhält man, wenn von dem zumindest ersten Wellenteil, dem zweiten Wellenteil und dem dritten Wellenteil zumindest ein Wellenteil als dünnwandiges Rohr ausgeführt ist.

Durch diese Maßnahme werden Widerstandsmomente der Radsatzwelle gegen Torsion erhöht und ein sparsamer Materialeinsatz bewirkt. Bei gleichem Werkstoffeinsatz können für die Hohlwelle im Vergleich zu einer Vollwelle eine Erhöhung der Festigkeit und somit der Bauteilsicherheit sowie eine Reduktion der Masse erzielt werden.

Eine günstige Lösung wird erzielt, wenn zumindest ein Sensor Mittel zur Datenübertragung aufweist.

Die Mittel zur Datenübertragung können beispielsweise eine Funkschnittstelle aufweisen. Durch diese Maßnahme können Informationen, welche einen Schaden der Radsatzwelle oder gelöste bzw. fehlende Verbindungsmittel anzeigen, rasch an einen Wartungsstand übermittelt werden.

Es ist vorteilhaft, wenn ein viertes Wellenteil vorgesehen ist, welches mittels zumindest einer stoffschlüssigen Verbindung in die Radsatzwelle eingefügt ist.

Durch diese Maßnahme erfolgt eine bedarfsgerechte Längenanpassung des Radsatzes. Beispielsweise kann ein kurzer Radsatz ohne das vierte Wellenteil in einem Schmalspurfahrzeug eingesetzt sein, ein langer Radsatz mit dem vierten Wellenteil in einem Normalspurfahrzeug.

Eine günstige Ausgestaltung erhält man, wenn zumindest ein Wellenteil mit einer Radsatzkomponente formschlüssig, kraftschlüssig oder stoffschlüssig verbunden ist oder als Radsatzkomponente ausgeführt ist.

Durch diese Maßnahme können beispielsweise Radsatzlager, Zahnräder von Getrieben etc. mit dem Radsatz verbunden werden, z.B. mittels Schrauben- oder Schweißverbindungen etc. Durch die erwähnte, baukastenartige Ausführung des Radsatzes kann ein Wellenteil, das mit einer Radsatzkomponente verbunden ist oder als Radsatzkomponente ausgeführt ist, beliebig positioniert sein (z.B. außerhalb eines von dem ersten Rad und dem zweiten Rad eingegrenzten Bereichs für ein Fahrwerk mit Außenlagerung oder innerhalb dieses Bereichs für ein Fahrwerk mit Innenlagerung).

Nachfolgend wird die Erfindung anhand von Ausführungsbeispielen näher erläutert.

Es zeigen beispielhaft:
- Fig. 1:: Einen Seitenriss einer ersten beispielhaften Ausführungsvariante eines erfindungsgemäßen Radsatzes mit einer Radsatzwelle, einer Überwachungs- und Diagnoseeinrichtung sowie miteinander und mit Rädern lösbar verbundenen Wellenteilen,
- Fig. 2:: Einen Seitenriss einer zweiten beispielhaften Ausführungsvariante eines erfindungsgemäßen Radsatzes mit einer Radsatzwelle, einer Überwachungs- und Diagnoseeinrichtung sowie lösbar miteinander verbundenen Wellenteilen, und
- Fig. 3:: Einen Seitenriss einer dritten beispielhaften Ausführungsvariante eines erfindungsgemäßen Radsatzes mit einer Radsatzwelle, einer Überwachungs- und Diagnoseeinrichtung, lösbar miteinander verbundenen Wellenteilen sowie einer Wellenbremsscheibe.

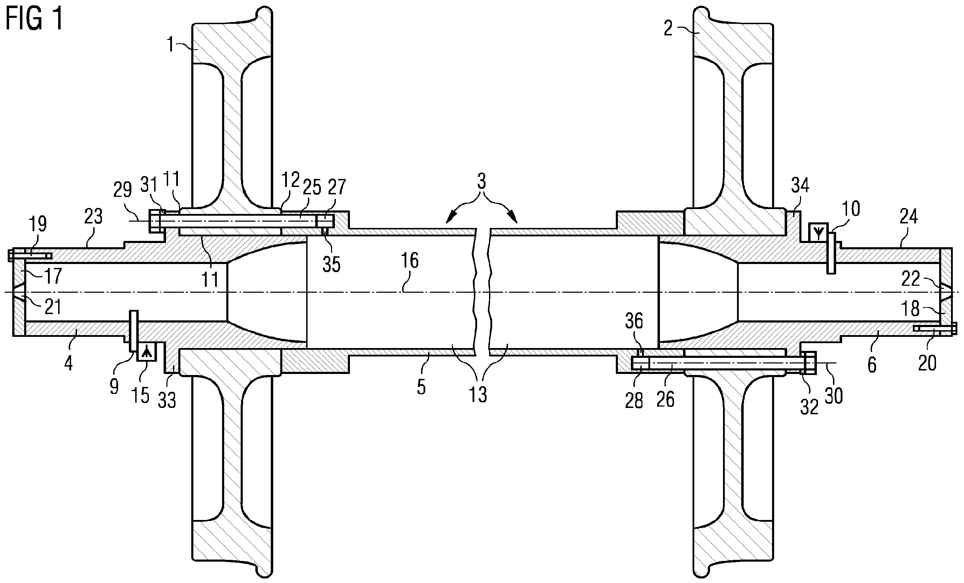

Ein in Fig. 1 dargestellter Seitenriss einer ersten beispielhaften Ausführungsvariante eines erfindungsgemäßen Radsatzes für ein nicht gezeigtes außengelagertes Fahrwerk eines Schienenfahrzeugs in Schnitt- und unterbrochener Darstellung umfasst ein erstes Rad 1 und ein zweites Rad 2, die über eine als Hohlwelle ausgeführte Radsatzwelle 3 miteinander gekoppelt und mit der Radsatzwelle 3 über Schraubenverbindungen verbunden sind.

Der Radsatz weist eine Radsatzlängsachse 16 auf. Die Radsatzwelle 3 umfasst ein erstes Wellenteil 4, ein zweites Wellenteil 5 und ein drittes Wellenteil 6 und weist einen mit Fluid bzw. Druckluft gefüllten Innenraum 13 auf, welcher mittels einer Diagnose- und Überwachungseinrichtung überwacht ist.

Das erste Wellenteil 4 und das dritte Wellenteil 6 sind als geschmiedete Endstücke der Radsatzwelle 3 ausgebildet.

Das erste Wellenteil 4 ist mittels eines ersten Deckels 17 verschlossen und mittels eines zwischen dem ersten Deckel 17 und dem ersten Wellenteil 4 angeordneten, nicht dargestellten ersten Dichtrings abgedichtet. Der erste Deckel 17 ist über eine erste Verschlussschraube 19 sowie weitere Verschlussschrauben, welche parallel zu der Radsatzlängsachse 16 vorgesehen sind, mit dem ersten Wellenteil 4 verschraubt. In dem ersten Deckel 17 ist ein erstes Ventil 21 als verschließbare Öffnung der Radsatzwelle 3 vorgesehen, an welches über einen standardisierten Adapter Druckmessgeräte (z.B. Manometer) und Druckversorgungsgeräte (z.B. Kompressoren oder Pumpen) anschließbar sind.

Mittels eines Druckmessgeräts können Luftdrücke im Stillstand des Schienenfahrzeugs gemessen (z.B. während eines Instandhaltungsvorgangs) und mit einem Druckgrenzwert verglichen werden. Ist der gemessene Luftdruck geringer als der Druckgrenzwert, so weist dies auf einen Schaden der Radsatzwelle 3 hin. Diese wird daraufhin repariert oder getauscht.

Mittels eines Druckversorgungsgeräts wird der Luftdruck des Innenraums 13 auf ein Soll-Druckluftniveau gesteigert bzw. eingestellt.

Weiterhin ist es möglich, die Radsatzwelle 3 über das erste Ventil 21 zu entlüften oder, in einem geschlossenen Zustand des ersten Ventils 21, die Druckluft in der Radsatzwelle 3 verlustfrei einzuschließen.

Mit dem ersten Wellenteil 4 ist ein erster Drucksensor 9 verbunden, dessen Messsonde in den Innenraum 13 der Radsatzwelle 3 ragt und außerhalb des ersten Wellenteils 4 Mittel zur Datenübertragung mit einer Funkschnittstelle 15, welche als Antenne ausgeführt ist, aufweist.

Der erste Drucksensor 9 ist als aus dem Stand der Technik bekannter Luftdrucksensor mit Piezowiderstand ausgebildet und wird mittels einer Lithium-Batterie mit Strom versorgt. Mittels der Messsonde werden in dem Innenraum 13 herrschende Luftdrücke gemessen. Entsprechende Messsignale werden in einer Verarbeitungseinheit des ersten Drucksensors 9 codiert und mittels der Antenne als Druckmessergebnisdaten an einen ersten Empfänger, welcher beispielsweise in einem Wartungsstand oder in einer Strecken- bzw. Leitzentrale angeordnet ist, gesendet.

In dem Wartungsstand oder der Strecken- bzw. Leitzentrale etc. können auf Grundlage der übertragenen

Druckmessergebnisdaten Warnereignisse ausgelöst werden. Wird beispielsweise ein vordefinierter Druckgrenzwert unterschritten, so weist dies auf eine Leckage bzw. einen Schaden der Radsatzwelle 3 (z.B. einen Durchriss) hin und es werden erforderliche Wartungsvorgänge (z.B. ein Tausch der Radsatzwelle 3) geplant.

Weiterhin ist der erste Drucksensor 9 mittels der Funkschnittstelle 15 und einem zweiten Empfänger in einem Wagenkasten des Schienenfahrzeugs mit einem Führerstand des Schienenfahrzeugs verbunden, wodurch auf Grundlage von in den Führerstand übertragenen Druckmessergebnisdaten auch in dem Führerstand Warnereignisse ausgelöst werden können, d.h. bei Detektion eines Schadens der Radsatzwelle 3 auf einer Anzeige ein entsprechender Warnhinweis dargestellt wird.

Das erste Wellenteil 4 ist als Sitz einer Radsatzkomponente ausgeführt, es weist einen ersten Lagersitz 23 für ein nicht dargestelltes erstes Radsatzlager des Fahrwerks auf.

Das dritte Wellenteil 6 ist konstruktiv und funktional gleich wie das erste Wellenteil 4 ausgeführt. Es weist ein zweites Ventil 22 auf, welches in einem zweiten Deckel 18, der mit dem dritten Wellenteil 6 über eine zweite Verschlussschraube 20 sowie weitere Verschlussschrauben verbunden und mittels eines nicht gezeigten zweiten Dichtrings abgedichtet ist. Weiterhin ist auf dem dritten Wellenteil 6 ein zweiter Drucksensor 10 angeordnet, der dem ersten Drucksensor 9 gleicht und als Redundanz zu diesem vorgesehen ist.

Auch das dritte Wellenteil 6 ist als Sitz einer Radsatzkomponente ausgeführt, es weist einen zweiten Lagersitz 24 für ein nicht gezeigtes zweites Radsatzlager des Fahrwerks auf.

Das zweite Wellenteil 5 ist als dünnwandiges Rohr ausgeführt, das mittels eines aus dem Stand der Technik bekannten Strangpressverfahrens gefertigt und in einem Bereich zwischen dem ersten Wellenteil 4 und dem dritten Wellenteil 6 angeordnet ist.

Das erste Wellenteil 4 ist über ein als erste Sechskantschraube 25 ausgebildetes erstes Verbindungsmittel, welches in einer ersten Bohrung bzw. einer ersten Sacklochbohrung 27 vorgesehen ist und eine erste Schraubenlängsachse 29 aufweist, welche parallel zu der Radsatzlängsachse 16 ausgerichtet ist, mit dem zweiten Wellenteil 5 sowie mit dem ersten Rad 1 verschraubt. Zwischen einem ersten Schraubenkopf der ersten Sechskantschraube 25 und dem ersten Wellenteil 4 ist eine erste Scheibe 31 vorgesehen.

Die erste Sacklochbohrung 27 ist durch einen ersten Flansch 33 des ersten Wellenteils 4, das erste Rad 1 sowie in das zweite Wellenteil 5 geführt.

Das zweite Wellenteil 5 ist im Bereich der ersten Sacklochbohrung 27 verdickt und verstärkt ausgeführt.

Neben der ersten Sechskantschraube 25 und der ersten Sacklochbohrung 27 sind weitere Sechskantschrauben und weitere Sacklochbohrungen zwischen dem ersten Wellenteil 4, dem ersten Rad 1 sowie dem zweiten Wellenteil 5 vorgesehen, welche entlang eines Umfangs einer Stirnfläche des ersten Flansches 33 angeordnet und parallel zu der Radsatzlängsachse 16 ausgerichtet sind.

Das erste Rad 1 ist mittels einer Übergangspassung auf das erste Wellenteil 4 aufgeschoben und kontaktiert den ersten Flansch 33. Das zweite Wellenteil 5 ist, ebenfalls mittels einer Übergangspassung, auf das erste Wellenteil 4 aufgeschoben, so dass das erste Rad 1 zwischen dem ersten Flansch 33 und einem verdickten bzw. verstärkten Bereich des zweiten Wellenteils 5 eingespannt ist.

Im Bereich zwischen dem ersten Rad 1 und dem ersten Wellenteil 4 ist eine, aufgrund des ersten Flansches 33, gewinkelt verlaufende, dichtende erste Trennfuge 11 ausgebildet.

Das erste Wellenteil 4 und das erste Rad 1 sowie das erste Wellenteil 4 und das zweite Wellenteil 5 weisen im Bereich der ersten Trennfuge 11 gemeinsame Tangentialflächen auf.

Das zweite Rad 2 ist im Hinblick auf dessen Verbindungstechnik gleich wie das erste Rad 1 ausgeführt.

Das dritte Wellenteil 6 ist über eine zweite

Sechskantschraube 26, welche in einer zweiten Sacklochbohrung 28 vorgesehen ist und eine zweite Schraubenlängsachse 30 aufweist, welche parallel zu der Radsatzlängsachse 16 ausgerichtet ist, mit dem zweiten Wellenteil 5 sowie mit dem zweiten Rad 2 verschraubt.

Zwischen einem zweiten Schraubenkopf der zweiten Sechskantschraube 26 und dem dritten Wellenteil 6 ist eine zweite Scheibe 32 vorgesehen.

Die zweite Sacklochbohrung 28 ist durch einen zweiten Flansch 34 des dritten Wellenteils 6, das zweite Rad 2 sowie in das zweite Wellenteil 5 geführt. Das zweite Wellenteil 5 ist im Bereich der zweiten Sacklochbohrung 28 verdickt und verstärkt, jedoch flanschfrei ausgeführt.

Neben der zweiten Sechskantschraube 26 und der zweiten Sacklochbohrung 28 sind weitere Sechskantschrauben und weitere Sacklochbohrungen zwischen dem dritten Wellenteil 6, dem zweiten Rad 2 sowie dem zweiten Wellenteil 5 vorgesehen, welche entlang eines Umfangs einer Stirnfläche des zweiten Flansches 34 angeordnet und parallel zu der Radsatzlängsachse 16 ausgerichtet sind.

Das zweite Rad 2 ist mittels einer Übergangspassung auf das dritte Wellenteil 6 aufgeschoben und kontaktiert den zweiten Flansch 34. Das zweite Wellenteil 5 ist, ebenfalls mittels einer Übergangspassung, auf das dritte Wellenteil 6 aufgeschoben, so dass das zweite Rad 2 zwischen dem zweiten Flansch 34 und einem verdickten bzw. verstärkten, jedoch flanschfreien Bereich des zweiten Wellenteils 5 eingespannt ist.

Zwischen der ersten Sacklochbohrung 27 und dem Innenraum 13 der ersten Radsatzwelle 3 ist eine erste Verbindungsbohrung 35 vorgesehen, welche orthogonal zu der ersten Schraubenlängsachse 29 bzw. zu der Radsatzlängsachse 16 ausgerichtet ist. Über diese erste Verbindungsbohrung 35 ist die erste Sacklochbohrung 27 mit Fluid bzw. Druckluft gefüllt. Die erste Scheibe 31 und das erste Wellenteil 4, das zweite Wellenteil 5 sowie das erste Rad 1 im Bereich der ersten Trennfuge 11 und einer dichtenden zweiten Trennfuge 12 zwischen dem zweiten Wellenteil 5 und dem ersten Rad 1 sind im Hinblick auf Materialien und Oberflächengüte in einer Weise ausgeführt, dass bei angezogener erster Sechskantschraube 25 keine Druckluft über die erste Sacklochbohrung 27 nach außen entweichen kann. Der Innenraum 13 ist demnach dicht.

Löst sich jedoch die erste Sechskantschraube 25 und bildet sich ein Spalt bzw. bilden sich Spalte (z.B. zwischen dem ersten Rad 1 und dem ersten Wellenteil 4 im Bereich der ersten Trennfuge 11 sowie dem zweiten Wellenteil 5 im Bereich der zweiten Trennfuge 12 oder zwischen der ersten Scheibe 31 und dem ersten Flansch 33), so entweicht Druckluft und ein sinkender Luftdruck in dem Innenraum 13 wird mittels des ersten Drucksensors 9 gemessen. Entsprechende Druckmessergebnisdaten werden über die Funkschnittstelle 15 des ersten Drucksensors 9 an den Führerstand des Schienenfahrzeugs und einen Wartungsstand übermittelt und dort in einer Recheneinheit ausgewertet.

Eine Übermittlung an den Wartungsstand erfolgt über ein Radio-Frequency Identification (RFID) - Lesegerät. Der erste Drucksensor 9 bzw. dessen Funkschnittelle 15 fungiert als RFID-Transponder. Durch Annäherung des eingeschalteten und aktivierten RFID-Lesegeräts an die Funkschnittstelle 15 wird diese mit Energie versorgt und es erfolgt eine Datenübertragung von der Funkschnittstelle 15 an das RFID-Lesegerät und von dem RFID-Lesegerät, welches über Kabel mit der Recheneinheit verbunden ist, an die Recheneinheit. Erfindungsgemäß ist es auch vorstellbar, den ersten Drucksensor 9 ohne Lithium-Batterie, d.h. als energielosen Sensor auszuführen. Hierbei erfolgt eine Energieversorgung des ersten Drucksensors 9 und seiner Funkschnittstelle 15 mittels des RFID-Lesegeräts, d.h. neben einer Datenübertragung an das RFID-Lesegerät erfolgt auch eine Druckmessung durch den ersten Drucksensor 9 erst bei Aktivierung des ersten Drucksensors 9 durch das RFID-Lesegerät, wobei die Funkschnittstelle 15 des ersten Drucksensors 9 wiederum als RFID-Transponder fungiert.

Wie oben beschrieben, werden bei Unterschreiten eines vordefinierten Druckgrenzwerts entsprechende Warnereignisse ausgelöst, wodurch ein Triebfahrzeugführer oder Wartungspersonal auf ein gelöstes bzw. sich lösendes Verbindungsmittel zwischen der Radsatzwelle 3 und dem ersten Rad 1 aufmerksam gemacht wird. Der erste Drucksensor 9 und die mit Druckluft gefüllte erste Sacklochbohrung 27 fungieren also als Diagnose- und Überwachungseinrichtung bzw. als Einrichtung zur Bauteil-Integritätsüberwachung und -Diagnose bezüglich Verbindungsmitteln, d.h. u.a. der ersten Sechskantschraube 25.

Der erste Drucksensor 9 ist mit einem in Fig. 1 nicht sichtbaren ersten Temperatursensor zu einer ersten Sensoreinheit, der zweite Drucksensor 10 mit einem in Fig. 1 ebenfalls nicht sichtbaren zweiten Temperatursensor zu einer zweiten Sensoreinheit verbunden.

Mittels des ersten Temperatursensors und des zweiten Temperatursensors werden Temperaturen des Fluids in dem Innenraum 13 gemessen und, wie die Druckmessergebnisdaten, an den Führerstand des Schienenfahrzeugs und an den Wartungsstand zur Auswertung in der Recheneinheit übermittelt. Auf Grundlage von Temperaturänderungen des Fluids werden strukturelle Schäden des Radsatzes (z.B. Risse) oder ein Verlust von Verbindungsmitteln detektiert. Erfindungsgemäß ist es auch vorstellbar, einen speziellen Sensor zur Ermittlung von Strömungsgeschwindigkeiten und Massenströmen des Fluids vorzusehen, wie z.B. ein thermisches Anemometer, und darüber Schäden des Radsatzes oder einen Verlust von Verbindungsmitteln zu detektieren.

Zwischen der zweiten Sacklochbohrung 28 und dem Innenraum 13 ist eine zweite Verbindungsbohrung 36, zwischen den weiteren Sacklochbohrungen in dem ersten Rad 1 sowie in dem zweiten Rad 2 und dem Innenraum 13 sind weitere Verbindungsbohrungen vorgesehen. Folglich sind auch die zweite Sechskantschraube 26 sowie die weiteren Sechskantschrauben zwischen der Radsatzwelle 3 und dem ersten Rad 1 bzw. dem zweiten Rad 2 von oben beschriebener Diagnose- und Überwachungseinrichtung erfasst.

Erfindungsgemäß ist es auch denkbar, dass die Mittel zur Datenübertragung des ersten Drucksensors 9 und des zweiten Drucksensors 10 eine Kabelschnittstelle bzw. Buchsen aufweisen, wodurch bei Stillstand des Schienenfahrzeugs Kabel bzw. Datenstecker angeschlossen werden können, um Druckmessergebnisdaten auszulesen und diese auf einer Rechenstation auszuwerten.

Weiterhin ist es möglich, dass der erste Drucksensor 9 und der zweite Drucksensor 10 Speichermodule aufweisen. Dadurch können Druckmessergebnisdaten gespeichert und einer zeitverzögerten Auswertung zugeführt werden. In diesem Zusammenhang ist es vorstellbar, dass der erste Drucksensor 9 eine Recheneinheit aufweist, in welcher Druckmessergebnisdaten verarbeitet bzw. vorverarbeitet werden können.

Erfindungsgemäß ist es ferner denkbar, dass das Fahrwerk als innengelagertes Fahrwerk ausgeführt ist und das zweite Wellenteil 5 verstärkt bzw. versteift ausgebildete Bereiche aufweist, in welchen Radsatzlager auf der Radsatzwelle 3 vorgesehen sind.

Darüber hinaus ist es vorstellbar, dass die Radsatzwelle 3 nicht als Hohlwelle ausgebildet ist, sondern mit Fluid befüllbare Hohlräume aufweist, welche zur Überwachung der ersten Sechskantschraube 25 sowie der weiteren Sechskantschrauben mittels der oben beschriebenen Diagnoseund Überwachungseinrichtung über die erste Verbindungsbohrung 35 und die weiteren Verbindungsbohrungen mit der ersten Sacklochbohrung 27 und den weiteren Sacklochbohrungen verbunden sind.

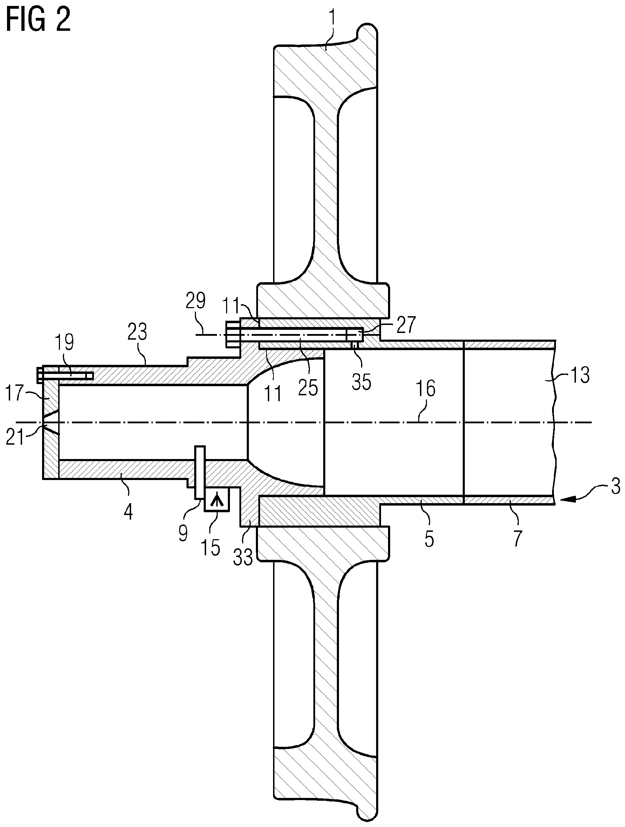

Fig. 2 zeigt einen Ausschnitt aus einer zweiten beispielhaften Ausführungsvariante eines erfindungsgemäßen Radsatzes für ein nicht dargestelltes Fahrwerk eines Schienenfahrzeugs als Seitenriss.

Der Radsatz umfasst eine Radsatzwelle 3 sowie ein erstes Rad 1 und ein nicht gezeigtes zweites Rad.

Die Radsatzwelle 3 weist ein erstes Wellenteil 4, ein zweites Wellenteil 5, ein nicht dargestelltes drittes Wellenteil und ein viertes Wellenteil 7 auf, welche koaxial bezüglich einer Radsatzlängsachse 16 angeordnet sind.

Das erste Wellenteil 4 und das dritte Wellenteil sind als geschmiedete Endstücke der Radsatzwelle 3 ausgeführt. Im Unterschied zu jener ersten beispielhaften Ausführungsvariante, welche in Fig. 1 dargestellt ist, ist das erste Rad 1 auf das zweite Wellenteil 5 und das zweite Rad auf das vierte Wellenteil 7 aufgepresst. Das zweite Wellenteil 5 ist im Bereich des ersten Rads 1, das vierte Wellenteil 7 im Bereich des zweiten Rads verdickt bzw. verstärkt ausgeführt.

Die Radsatzwelle 3 ist als Hohlwelle ausgeführt bzw. bildet einen Hohlraum bzw. einen druckdichten Innenraum 13 aus. Das erste Wellenteil 4 ist mittels eines ersten Deckels 17, welcher mittels einer ersten Verschlussschraube 19 und weiterer Verschlussschrauben mit dem ersten Wellenteil 4 verbunden ist, verschlossen. In dem ersten Deckel 17 ist ein erstes Ventil 21 angeordnet, über welches der Innenraum 13 mit Fluid (z.B. mit Druckluft) befüllt und entleert (z.B. entlüftet) werden kann.

Mit dem ersten Wellenteil 4 ist ein erster Drucksensor 9 verbunden, welcher Drücke in dem Innenraum 13 der Radsatzwelle 3 misst. Der erste Drucksensor 9 ist konstruktiv und funktional wie im Zusammenhang mit Fig. 1 beschrieben ausgeführt.

Das erste Wellenteil 4 ist über eine erste Sechskantschraube 25 in einer ersten Sacklochbohrung 27 sowie weitere Sechskantschrauben in weiteren Sacklochbohrungen mit dem zweiten Wellenteil 5 verschraubt. Die erste Sechskantschraube 25 und die weiteren Sechskantschrauben sind in einem ersten Flansch 33 des ersten Wellenteils 4 und in einem verstärkten Bereich des zweiten Wellenteils 5 geführt.

Zwischen dem ersten Wellenteil 4 und dem zweiten Wellenteil 5 ist eine aufgrund des ersten Flansches 33 gewinkelt ausgeführte, dichtende erste Trennfuge 11 vorgesehen.

Das erste Wellenteil 4 und das zweite Wellenteil 5 weisen im Bereich der ersten Trennfuge 11 gemeinsame Tangentialflächen auf.

Zwischen der ersten Sacklochbohrung 27 und den weiteren Sacklochbohrungen einerseits sowie dem Innenraum 13 andererseits sind eine erste Verbindungsbohrung 35 und weitere Verbindungsbohrungen vorgesehen, wodurch gelöste oder sich lösende Verbindungsmittel anhand eines Druckverlusts (z.B. aufgrund eines Aufklaffens der ersten Trennfuge 11) mittels des ersten Drucksensors 9 detektiert werden können. Die Verbindungsmittel, d.h. die erste Sechskantschraube 25 sowie die weiteren Sechskantschrauben sind also durch eine Diagnose- und Überwachungseinrichtung, welche auch im Zusammenhang mit Fig. 1 beschrieben ist, erfasst.

Das zweite Wellenteil 5 ist mit dem vierten Wellenteil 7 reibverschweißt, d.h. stoffschlüssig und dicht verbunden. Entsprechende Reibschweißvorgänge sind als aus dem Stand der Technik bekannte Rührreibschweißvorgänge ausgeführt. Erfindungsgemäß ist es jedoch auch möglich, das zweite Wellenteil 5 mit dem vierten Wellenteil 7 mittels eines aus dem Stand der Technik bekannten Abbrennstumpfschweißverfahrens zu verbinden. Aufgrund von Abbrennstumpfschweißvorgängen an Schweißnähten erzeugte Grate werden mittels Schleifvorgängen entfernt.

Das vierte Wellenteil 7 ist mit dem dritten Wellenteil, konstruktiv gleich wie das erste Wellenteil 4 mit dem zweiten Wellenteil 5, verschraubt.

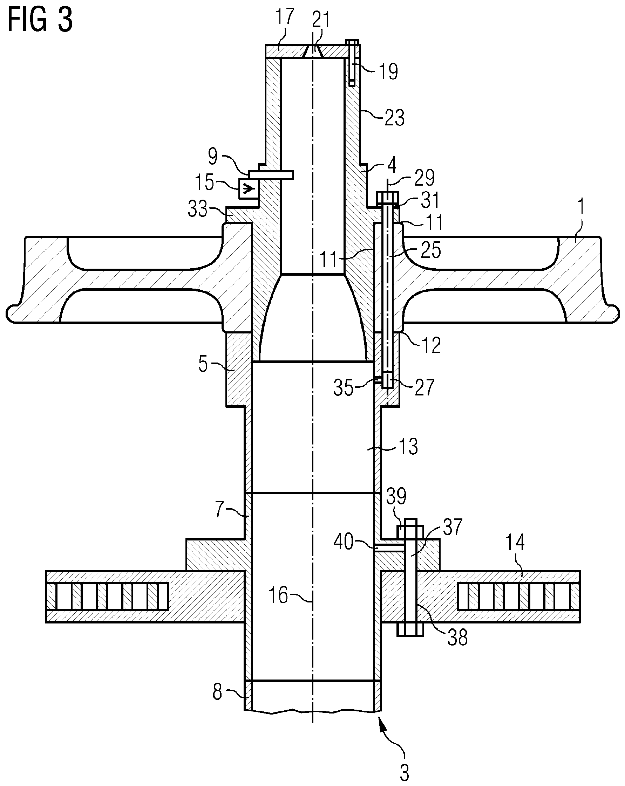

In Fig. 3 ist ein Ausschnitt aus einer dritten beispielhaften Ausführungsvariante eines erfindungsgemäßen Radsatzes eines nicht gezeigten Fahrwerks eines Schienenfahrzeugs als Seitenriss dargestellt. Dieser Radsatz umfasst eine Radsatzwelle 3, ein erstes Rad 1 und ein nicht gezeigtes zweites Rad.

Die Radsatzwelle 3 ist als druckdicht verschließbare Hohlwelle ausgeführt und weist ein erstes Wellenteil 4, ein zweites Wellenteil 5, ein nicht dargestelltes drittes Wellenteil, ein viertes Wellenteil 7 sowie ein fünftes Wellenteil 8 auf. Das erste Wellenteil 4 und das dritte Wellenteil sind konstruktiv und funktional wie im Zusammenhang mit Fig. 1 beschrieben ausgeführt. Weiterhin sind Verbindungen des ersten Wellenteils 4 und des zweiten Wellenteils 5 miteinander sowie mit dem ersten Rad 1 gleich wie in jener ersten Ausführungsvariante, die in Fig. 1 gezeigt ist, ausgebildet.

Dementsprechend sind ein als erste Sechskantschraube 25 ausgeführtes erstes Verbindungsmittel in einer ersten Bohrung bzw. einer ersten Sacklochbohrung 27 sowie weitere Verbindungsmittel bzw. Sechskantschrauben in weiteren Bohrungen bzw. Sacklochbohrungen vorgesehen.

Es werden daher in Fig. 3 teilweise gleiche Bezugszeichen wie in Fig. 1 verwendet.

Weiterhin sind Verbindungen des dritten Wellenteils und des fünften Wellenteils 8 miteinander sowie mit dem zweiten Rad gleich wie jene in Fig. 1 dargestellten Verbindungen des zweiten Wellenteils 5 von Fig. 1 und des dritten Wellenteils 6 von Fig. 1 mit dem zweiten Rad 2 von Fig. 1 ausgebildet.

Im Unterschied zu Fig. 1 weist die Radsatzwelle 3 von Fig. 3 das vierte Wellenteil 7 und das fünfte Wellenteil 8 auf. Das vierte Wellenteil 7 ist stoffschlüssig, mittels eines aus dem Stand der Technik bekannten Rührreibschweißvorgangs, mit dem zweiten Wellenteil 5 und dem fünften Wellenteil 8 verbunden.

Auf dem vierten Wellenteil 7 ist eine Wellenbremsscheibe 14 angeordnet, welche als innenbelüftete Bremsscheibe mit Kühlkanälen ausgeführt ist.

Das vierte Wellenteil 7 ist als Nabe dieser Wellenbremsscheibe 14 ausgebildet, ist folglich im Bereich der Wellenbremsscheibe 14 verstärkt ausgeführt, d.h. weist in diesem Bereich einen größeren Außendurchmesser auf als außerhalb dieses Bereichs. Das vierte Wellenteil 7 fungiert also als Sitz einer Radsatzkomponente des Fahrwerks.

Die Wellenbremsscheibe 14 ist über ein zweites Verbindungsmittel bzw. eine erste Durchgangsschraube 37 in einer zweiten Bohrung bzw. einer ersten Durchgangsbohrung 38 mit einer ersten Mutter 39 sowie über weitere Durchgangsschrauben in weiteren Durchgangsbohrungen mit weiteren Muttern, welche parallel zu einer Radsatzlängsachse 16 angeordnet sind, mit dem vierten Wellenteil 7 verschraubt. Die erste Durchgangsbohrung 38 sowie die weiteren Durchgangsbohrungen sind parallel zu der Radsatzlängsachse 16 angeordnet und durch das vierte Wellenteil 7 sowie durch die Wellenbremsscheibe 14 hindurchgeführt.

Die Radsatzwelle 3 weist eine Diagnose- und Überwachungseinrichtung auf, welche auch im Zusammenhang mit Fig. 1 und Fig. 2 beschrieben ist. Ein Innenraum 13 der Radsatzwelle 3 ist mit Druckluft gefüllt, entsprechende Luftdrücke werden mittels eines ersten Drucksensors 9, welcher konstruktiv und funktional gleich wie jener ausgeführt ist, der auch in Fig. 1 dargestellt ist, gemessen. Druckmessergebnisdaten werden über eine Funkschnittstelle 15 des ersten Drucksensors 9 an einen Führerstand des nicht gezeigten Schienenfahrzeugs und einen ebenfalls nicht dargestellten Wartungsstand gesendet.

Ein Druckabfall in dem Innenraum 13 weist auf einen Schaden der Radsatzwelle 3 (z.B. einen Durchriss) oder gelöste bzw. sich lösende Verbindungsmittel zwischen einzelnen Wellenteilen oder zwischen Wellenteilen und Rädern hin.

Über eine erste Nabenbohrung 40 zwischen der ersten Durchgangsbohrung 38 und dem Innenraum 13 der Radsatzwelle 3 ist die erste Durchgangsbohrung 38 mit Druckluft versorgt. In einem angezogenen Zustand der ersten Durchgangsschraube 37 sind Bereiche zwischen der ersten Durchgangsbohrung 38, des vierten Wellenteils 7 und der Wellenbremsscheibe 14 abgedichtet. Weiterhin ist die erste Durchgangsbohrung 38 über einen Schraubenkopf der ersten Durchgangsschraube 37 abgedichtet.

Löst sich die erste Durchgangsschraube 37, so bildet sich zwischen dem vierten Wellenteil 7 sowie der

Wellenbremsscheibe 14 und/oder zwischen dem vierten Wellenteil 7 und dem Schraubenkopf der ersten Durchgangsschraube 37 ein Spalt, wodurch Druckluft aus dem Innenraum 13 nach außen entweichen kann. Ein entsprechend sinkender Luftdruck wird von dem ersten Drucksensor 9 gemessen und anschließend ausgewertet (z.B. mittels einer Recheneinheit in dem Führerstand des Schienenfahrzeugs). Wird ein definierter Druckgrenzwert unterschritten, so wird ein Warnereignis erzeugt. Beispielsweise wird eine Warnanzeige in dem Führerstand aktiviert und/oder es wird eine Zwangsbremsung des Schienenfahrzeugs ausgelöst.

Die weiteren Durchgangsbohrungen sind über weitere Nabenbohrungen mit dem Innenraum 13 der Radsatzwelle 3 verbunden, weshalb auch die weiteren Durchgangsschrauben bzw. deren Befestigungszustände von der Diagnose- und Überwachungseinrichtung erfasst sind.

Erfindungsgemäß ist es selbstverständlich auch denkbar, dass auf mehr als einem Wellenteil eine Bremsscheibe vorgesehen ist bzw. dass mehr als ein mit einer Bremsscheibe verbundenes Wellenteil in die Radsatzwelle 3 eingefügt ist.

Weiterhin ist es auch vorstellbar, dass eines der Wellenteile oder mehrere Wellenteile mit einer anderen Radsatzkomponente als einer Bremsscheibe verbunden ist oder sind bzw. als andere Radsatzkomponente oder andere Radsatzkomponenten ausgeführt ist oder sind. Beispielsweise ist es möglich, dass ein Zahnrad in die Radsatzwelle 3 oder in ein Wellenteil eingeschweißt ist.

Darüber hinaus ist es denkbar, dass die Wellenbremsscheibe 14 beispielsweise stoffschlüssig mit dem vierten Wellenteil 7 verbunden ist.

### Liste der Bezeichnungen

- 1: Erstes Rad
- 2: Zweites Rad
- 3: Radsatzwelle
- 4: Erstes Wellenteil
- 5: Zweites Wellenteil
- 6: Drittes Wellenteil
- 7: Viertes Wellenteil
- 8: Fünftes Wellenteil
- 9: Erster Drucksensor
- 10: Zweiter Drucksensor
- 11: Erste Trennfuge
- 12: Zweite Trennfuge
- 13: Innenraum
- 14: Wellenbremsscheibe
- 15: Funkschnittstelle
- 16: Radsatzlängsachse
- 17: Erster Deckel
- 18: Zweiter Deckel
- 19: Erste Verschlussschraube
- 20: Zweite Verschlussschraube
- 21: Erstes Ventil
- 22: Zweites Ventil
- 23: Erster Lagersitz
- 24: Zweiter Lagersitz
- 25: Erste Sechskantschraube
- 26: Zweite Sechskantschraube
- 27: Erste Sacklochbohrung
- 28: Zweite Sacklochbohrung
- 29: Erste Schraubenlängsachse
- 30: Zweite Schraubenlängsachse
- 31: Erste Scheibe
- 32: Zweite Scheibe
- 33: Erster Flansch
- 34: Zweiter Flansch
- 35: Erste Verbindungsbohrung
- 36: Zweite Verbindungsbohrung
- 37: Erste Durchgangsschraube
- 38: Erste Durchgangsbohrung
- 39: Erste Mutter
- 40: Erste Nabenbohrung

## Patentansprüche

1. Radsatz für Fahrzeuge, insbesondere für Schienenfahrzeuge, der ein erstes Rad (1), ein zweites Rad (2) sowie eine Radsatzwelle (3) aufweist, wobei die Radsatzwelle zumindest ein erstes Wellenteil (4), ein zweites Wellenteil (5) und ein drittes Wellenteil (6) umfasst, die miteinander verbunden sind, wobei von dem zumindest ersten Wellenteil, dem zweiten Wellenteil und dem dritten Wellenteil zumindest ein Wellenteil als mit Fluid befüllbare Hohlwelle ausgebildet ist, die einen entsprechenden Innenraum (13) aufweist, oder zumindest einen mit Fluid befüllbaren Hohlraum aufweist, wobei zumindest das erste Wellenteil (4) mit dem zweiten Wellenteil (5) lösbar verbunden ist, **dadurch gekennzeichnet, dass** zumindest zwischen dem ersten Wellenteil (4) und dem ersten Rad (1) oder zwischen dem ersten Wellenteil (4) und dem zweiten Wellenteil (5) zumindest eine dichtende erste Trennfuge (11) gewinkelt ausgebildet ist.

2. Radsatz nach Anspruch 1, **dadurch gekennzeichnet, dass** zumindest eine verschließbare Öffnung sowie zumindest ein als erster Drucksensor (9) ausgebildeter Sensor vorgesehen sind.

3. Radsatz nach Anspruch 1 oder 2, **dadurch gekennzeichnet, dass** zumindest eine verschließbare Öffnung sowie zumindest ein als erster Temperatursensor ausgebildeter Sensor vorgesehen sind.

4. Radsatz nach Anspruch 1, **dadurch gekennzeichnet, dass** zumindest eine verschließbare Öffnung sowie zumindest ein Sensor zur Ermittlung eines Massenstroms oder einer Strömungsgeschwindigkeit vorgesehen sind.

5. Radsatz nach einem der Ansprüche 1 bis 4, **dadurch gekennzeichnet, dass** das erste Wellenteil (4) und das erste Rad (1) oder das erste Wellenteil (4) und das zweite Wellenteil (5) im Bereich der zumindest ersten Trennfuge (11) gemeinsame Tangentialflächen aufweisen.

6. Radsatz nach einem der Ansprüche 1 bis 5, **dadurch gekennzeichnet, dass** zumindest eine erste Bohrung für ein erstes Verbindungsmittel zwischen dem ersten Wellenteil (4) und dem zweiten Wellenteil (5) oder zwischen dem ersten Wellenteil (4) und dem ersten Rad (1) mit einem Innenraum (13) der Hohlwelle oder mit dem zumindest einen Hohlraum verbunden ist.

7. Radsatz nach einem der Ansprüche 1 bis 6, **dadurch gekennzeichnet, dass** das erste Rad (1) und das zweite Rad (2) über Schraubenverbindungen mit der Radsatzwelle (3) gekoppelt sind.

8. Radsatz nach Anspruch 6 oder 7, **dadurch gekennzeichnet, dass** das erste Verbindungsmittel das erste Rad (1) mit dem ersten Wellenteil (4) und dem zweiten Wellenteil (5) verbindet.

9. Radsatz nach Anspruch 8, **dadurch gekennzeichnet, dass** das erste Verbindungsmittel in einer ersten Sacklochbohrung (27) vorgesehen ist.

10. Radsatz nach einem der Ansprüche 1 bis 9, **dadurch gekennzeichnet, dass** das erste Rad (1) auf das erste Wellenteil (4) aufgeschoben ist und einen ersten Flansch (33) des ersten Wellenteils (4) kontaktiert, wobei das zweite Wellenteil (5) auf das erste Wellenteil (4) aufgeschoben ist und das erste Rad (1) zwischen dem ersten Flansch (33) sowie dem zweiten Wellenteil (5) eingespannt ist.

11. Radsatz nach einem der Ansprüche 1 bis 10, **dadurch gekennzeichnet, dass** auf der Radsatzwelle (3) zumindest eine Wellenbremsscheibe (14) vorgesehen ist, wobei die Radsatzwelle (3) im Bereich der zumindest einen Wellenbremsscheibe (14) als Nabe der zumindest einen Wellenbremsscheibe (14) ausgebildet ist.

12. Radsatz nach Anspruch 11, **dadurch gekennzeichnet, dass** eine zweite Bohrung für ein zweites Verbindungsmittel zwischen der Radsatzwelle (3) und der zumindest einen Wellenbremsscheibe (14) mit dem Innenraum (13) der Hohlwelle oder mit dem zumindest einen Hohlraum verbunden ist.

13. Radsatz nach einem der Ansprüche 1 bis 12, **dadurch gekennzeichnet, dass** von dem zumindest ersten Wellenteil (4), dem zweiten Wellenteil (5) und dem dritten Wellenteil (6) zumindest ein Wellenteil als dünnwandiges Rohr ausgeführt ist.

14. Radsatz nach einem der Ansprüche 1 bis 13, **dadurch gekennzeichnet, dass** der Innenraum (13) der Hohlwelle oder der zumindest eine Hohlraum mit Druckluft gefüllt ist.

15. Radsatz nach einem der Ansprüche 2 bis 14, **dadurch gekennzeichnet, dass** der zumindest eine Sensor als energieloser Sensor ausgebildet ist.

16. Radsatz nach einem der Ansprüche 2 bis 15, **dadurch gekennzeichnet, dass** der zumindest eine Sensor Mittel zur Datenübertragung aufweist.

17. Radsatz nach Anspruch 16, **dadurch gekennzeichnet, dass** die Mittel zur Datenübertragung zumindest eine Funkschnittstelle (15) aufweisen.

18. Radsatz nach einem der Ansprüche 1 bis 17, **dadurch gekennzeichnet, dass** mit dem Innenraum (13) der Hohlwelle oder mit dem zumindest einen Hohlraum Druckmessgeräte und Druckversorgungsgeräte verbindbar sind.

19. Radsatz nach einem der Ansprüche 1 bis 18, **dadurch gekennzeichnet, dass** ein viertes Wellenteil (7) vorgesehen ist, welches mittels zumindest einer stoffschlüssigen Verbindung in die Radsatzwelle (3) eingefügt ist.

20. Radsatz nach einem der Ansprüche 1 bis 19, **dadurch gekennzeichnet, dass** zumindest ein Wellenteil mit einer Radsatzkomponente formschlüssig, kraftschlüssig oder stoffschlüssig verbunden ist oder als Radsatzkomponente ausgeführt ist.

21. Fahrwerk mit zumindest einem Radsatz nach einem der Ansprüche 1 bis 20.

## Claims

1. Wheelset for vehicles, in particular for rail vehicles, which has a first wheel (1), a second wheel (2) and a wheelset shaft (3), wherein the wheelset shaft comprises at least a first shaft part (4), a second shaft part (5) and a third shaft part (6), which are connected to one another, wherein of the at least first shaft part, the second shaft part and the third shaft part, at least one shaft part is embodied as a hollow shaft which can be filled with fluid and which has a corresponding interior space (13), or has at least one cavity which can be filled with fluid, wherein at least the first shaft part (4) is detachably connected to the second shaft part (5), **characterised in that** at least one sealing first joint (11) is embodied to be angled at least between the first shaft part (4) and the first wheel (1) or between the first shaft part (4) and the second shaft part (5).

2. Wheelset according to claim 1, **characterised in that** at least one closeable opening and at least one sensor embodied as a first pressure sensor (9) are provided.

3. Wheelset according to claim 1 or 2, **characterised in that** at least one closeable opening and at least one sensor embodied as a first temperature sensor are provided.

4. Wheelset according to claim 1, **characterised in that** at least one closeable opening and at least one sensor for determining a mass flow rate or a flow speed are provided.

5. Wheelset according to one of claims 1 to 4, **characterised in that** the first shaft part (4) and the first wheel (1) or the first shaft part (4) and the second shaft part (5) have shared tangential surfaces in the region of at least the first joint (11).

6. Wheelset according to one of claims 1 to 5, **characterised in that** at least one first bore for a first connecting means between the first shaft part (4) and the second shaft part (5) or between the first shaft part (4) and the first wheel (1) is connected to an interior space (13) of the hollow shaft or to the at least one cavity.

7. Wheelset according to one of claims 1 to 6, **characterised in that** the first wheel (1) and the second wheel (2) are coupled to the wheelset shaft (3) by way of a screw connections.

8. Wheelset according to claim 6 or 7, **characterised in that** the first connecting means connects the first wheel (1) to the first shaft part (4) and the second shaft part (5).

9. Wheelset according to claim 8, **characterised in that** the first connecting means is provided in a first blind hole (27).

10. Wheelset according to one of claims 1 to 9, **characterised in that** the first wheel (1) is slid onto the first shaft part (4) and contacts a first flange (33) of the first shaft part (4), wherein the second shaft part (5) is slid onto the first shaft part (4) and the first wheel (1) is clamped between the first flange (33) and the second shaft part (5).

11. Wheelset according to one of claims 1 to 10, **characterised in that** at least one shaft brake disc (14) is provided on the wheelset shaft (3), wherein in the region of the at least one shaft brake disc (14), the wheelset shaft (3) is embodied as the hub of the at least one shaft brake disc (14) .

12. Wheelset according to claim 11, **characterised in that** a second bore for a second connecting means between the wheelset shaft (3) and the at least one shaft brake disk (14) is connected to the interior space (13) of the hollow shaft or to the at least one cavity.

13. Wheelset according to one of claims 1 to 12, **characterised in that** of the at least first shaft part (4), the second shaft part (5) and the third shaft part (6), at least one shaft part is designed as a thin-walled pipe.

14. Wheelset according to one of claims 1 to 13, **characterised in that** the interior space (13) of the hollow shaft or the at least one cavity is filled with compressed air.

15. Wheelset according to one of claims 2 to 14, **characterised in that** the at least one sensor is embodied as a zero power sensor.

16. Wheelset according to one of claims 2 to 15, **characterised in that** the at least one sensor has means for data transmission.

17. Wheelset according to claim 16, **characterised in that** the means for data transmission have at least one radio interface (15) .

18. Wheelset according to one of claims 1 to 17, **characterised in that** pressure measuring devices and pressure supply devices can be connected to the interior space (13) of the hollow shaft or to the at least one cavity.

19. Wheelset according to one of claims 1 to 18, **characterised in that** a fourth shaft part (7) is provided, which is inserted into the wheelset shaft (3) by means of at least one material-bonded connection.

20. Wheelset according to one of claims 1 to 19, **characterised in that** at least one shaft part is connected to a wheelset component in a form-fit, force-fit or material-bonded manner, or is designed as a wheelset component.

21. Chassis with at least one wheelset according to one of claims 1 to 20.

## Revendications

1. Essieu monté pour véhicules, en particulier pour véhicules ferroviaires, qui présente une première roue (1), une deuxième roue (2) ainsi qu'un arbre d'essieu (3), dans lequel l'arbre d'essieu comprend au moins une première partie d'arbre (4), une deuxième partie d'arbre (5) et une troisième partie d'arbre (6) qui sont reliées entre elles, dans lequel, au moins une partie d'arbre parmi l'au moins une première partie d'arbre, deuxième partie d'arbre et troisième partie d'arbre, est conçue en tant qu'arbre creux pouvant être rempli d'un fluide qui présente un espace intérieur (13) correspondant ou au moins une cavité pouvant être remplie d'un fluide, dans lequel au moins la première partie d'arbre (4) est reliée de manière séparable à la deuxième partie d'arbre (5), **caractérisé en ce qu'**au moins entre la première partie d'arbre (4) et la première roue (1) ou entre la première partie d'arbre (4) et la deuxième partie d'arbre (5), au moins un premier joint de séparation d'étanchéité (11) est formé coudé.

2. Essieu monté selon la revendication 1, **caractérisé en ce qu'**au moins une ouverture pouvant être fermée ainsi qu'au moins un capteur formé en tant que premier capteur de pression (9) sont prévus.

3. Essieu monté selon la revendication 1 ou 2, **caractérisé en ce qu'**au moins une ouverture pouvant être fermée ainsi qu'au moins un capteur formé en tant que premier capteur de température sont prévus.

4. Essieu monté selon la revendication 1, **caractérisé en ce qu'**au moins une ouverture pouvant être fermée ainsi qu'au moins un capteur pour déterminer un débit massique ou une vitesse d'écoulement sont prévus.

5. Essieu monté selon l'une des revendications 1 à 4, **caractérisé en ce que** la première partie d'arbre (4) et la première roue (1) ou la première partie d'arbre (4) et la deuxième partie d'arbre (5) présentent des surfaces tangentielles communes au niveau de l'au moins un premier joint de séparation (11).

6. Essieu monté selon l'une des revendications 1 à 5, **caractérisé en ce qu'**au moins un premier perçage pour un premier moyen de liaison entre la première partie d'arbre (4) et la deuxième partie d'arbre (5) ou entre la première partie d'arbre (4) et la première roue (1) est relié à un espace intérieur (13) de l'arbre creux ou à l'au moins une cavité.

7. Essieu monté selon l'une des revendications 1 à 6, **caractérisé en ce que** la première roue (1) et la deuxième roue (2) sont couplées à l'arbre d'essieu (3) par des liaisons vissées.

8. Essieu monté selon la revendication 6 ou 7, **caractérisé en ce que** le premier moyen de liaison relie la première roue (1) à la première partie d'arbre (4) et à la deuxième partie d'arbre (5) .

9. Essieu monté selon la revendication 8, **caractérisé en ce que** le premier moyen de liaison est prévu dans un premier perçage borgne (27).

10. Essieu monté selon l'une des revendications 1 à 9, **caractérisé en ce que** la première roue (1) est poussée sur la première partie d'arbre (4) et touche une première bride (33) de la première partie d'arbre (4), dans lequel la deuxième partie d'arbre (5) est poussée sur la première partie d'arbre (4) et la première roue (1) est attelée entre la première bride (33) ainsi que la deuxième partie d'arbre (5).

11. Essieu monté selon l'une des revendications 1 à 10, **caractérisé en ce qu'**au moins un disque de frein d'arbre (14) est prévu sur l'arbre d'essieu (3), dans lequel l'arbre d'essieu (3) est formé au niveau de l'au moins un disque de frein d'arbre (14) comme moyeu de l'au moins un disque de frein d'arbre (14).

12. Essieu monté selon la revendication 11, **caractérisé en ce qu'**un deuxième perçage pour un deuxième moyen de liaison entre l'arbre d'essieu (3) et l'au moins un disque de freinage d'arbre (14) est relié à l'espace intérieur (13) de l'arbre creux ou à l'au moins une cavité.

13. Essieu monté selon l'une des revendications 1 à 12, **caractérisé en ce que** au moins une partie d'arbre parmi l'au moins une première partie d'arbre (4), deuxième partie d'arbre (5) et troisième partie d'arbre (6), est conçue en tant que tube à parois fines.

14. Essieu monté selon l'une des revendications 1 à 13, **caractérisé en ce que** l'espace intérieur (13) de l'arbre creux ou l'au moins une cavité est rempli(e) d'air comprimé.

15. Essieu monté selon l'une des revendications 2 à 14, **caractérisé en ce que** l'au moins un capteur est conçu comme capteur sans énergie.

16. Essieu monté selon l'une des revendications 2 à 15, **caractérisé en ce que** l'au moins un capteur présente des moyens pour la transmission de données.

17. Essieu monté selon la revendication 16, **caractérisé en ce que** les moyens de transmission de données présentent au moins une interface radio (15).

18. Essieu monté selon l'une des revendications 1 à 17, **caractérisé en ce que** des manomètres et des appareils d'alimentation en pression peuvent être reliés à l'espace intérieur (13) de l'arbre creux ou à l'au moins une cavité.

19. Essieu monté selon l'une des revendications 1 à 18, **caractérisé en ce qu'**une quatrième partie d'arbre (7) est prévue, laquelle est insérée dans l'arbre d'essieu (3) au moyen d'au moins une liaison par complémentarité de matières.

20. Essieu monté selon l'une des revendications 1 à 19, **caractérisé en ce qu'**au moins une partie d'arbre est reliée à une composante d'essieu par complémentarité de formes, adhérence de forces ou de matières ou est conçue en tant que composante d'essieu.

21. Châssis comprenant au moins un essieu monté selon l'une des revendications 1 à 20.
